# EUROPEAN PATENT APPLICATION

(11) **EP 1 380 199 A1**
(43) Date of publication of application: **14.01.2004**
(21) Application number: 03076912.9
(22) Date of filing: 19.06.2003
(51) Int. Cl.: A01B 31/00, A01B 19/06, A01B 35/00

(54) **Triple-rake levelling machine**

(30) Priority: 09.07.2002 IT RE20020019 U
(71) Applicant: Carboni, Renzo, 42022 Boretto (Reggio Emilia) (IT)
(72) Inventor: Carboni, Renzo, 42022 Boretto (Reggio Emilia) (IT)
(74) Representative: Corradini, Corrado

(57) **Abstract**

A levelling machine with oscillating combs supported by a frame fixed to a power cultivator, the rear power take-off of which drives the combs, comprises a series of connecting rods (10) and rocker arms (11) supported by the frame in such a manner as to oscillate in the horizontal plane, three parallel combs or rakes (102, 112, 122), of which one (102) is supported at the end of the connecting rods and two (112, 122) are supported at the opposite ends of the rocker arms, and means for oscillating said connecting rods and said rocker arms, the movement being transmitted to each of the two combs (102, 122) oscillating in phase by a crank mechanism (51) of the connecting rod-crank type, the two cranks (511, 512) being connected in phase opposition to the same shaft (5).

## Description

To smooth and level fine soil, such as the soil to be sown in gardens, or surfaces finished with gravel or sand, the known art uses machines to be coupled to a specific self-propelled means comprising two parallel rear rakes or combs positioned perpendicular to the travel direction and driven with a reciprocating movement in phase opposition.

For proper execution of the work, known machines require that two passages in opposite travel directions be effected, the second passage generally being effected in reverse for fine finishing.

An object of this patent is to provide a levelling machine able to produce a virtually perfect result in a single passage, with improved capacity for moving the material during levelling.

A further object of the patent is to provide a universal machine which can be coupled to any cultivator of known type.

These objects are attained by a machine having the characteristics defined in the claims.

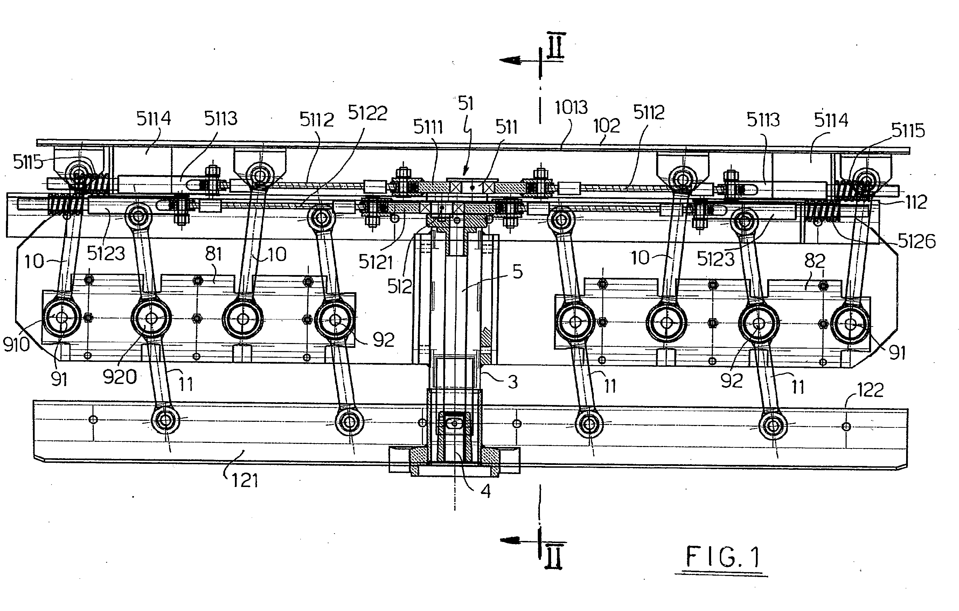

Figure 1 is a plan view of the invention.

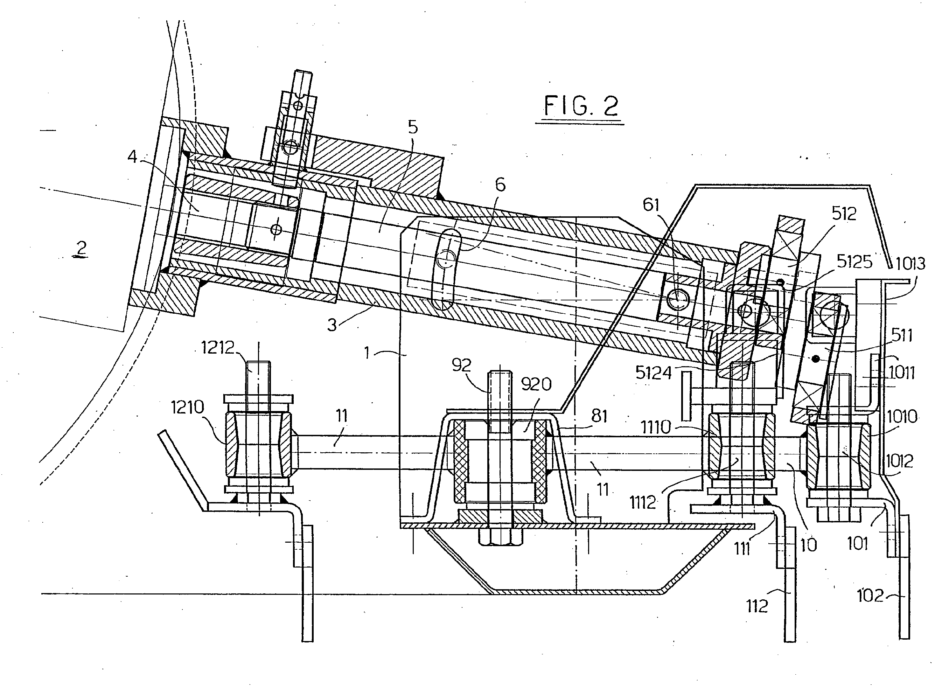

Figure 2 is a section on the line ll-ll of Figure 1.

The figures show a frame 1 to be fixed, by standard devices, to the rear part of a normal power cultivator indicated schematically by 2. The frame 1 is fixed to a central tubular body 3, the inclination of which to the frame 1 in the vertical plane can be adjusted by the provision of a hinge pin 61 and curved slots 6, of which one is provided per side.

The tubular body 3 is flanged coaxially to the rear power take-off 4 of the power cultivator 2, and supports in its interior a transmission shaft 5 the opposite end of which carries a gooseneck 51 provided with two cranks 511, 512 as described hereinafter.

In its lower part, the frame 1 comprises two aligned box casings indicated by 81 and 82, each of which carries four equidistant vertical pins indicated by 91 and 92 for simplicity.

Connecting rods 10 are mounted on the pins 91 by way of interposed anti-vibration bushes 910, whereas rocker arms 11 are mounted on the pins 92, again by way of interposed anti-vibration bushes 920.

The connecting rods and rocker arms emerge from the casings 81 and 82 through suitable windows, not visible in the figures.

At their ends the connecting rods 10 carry bushes 1010, which by way of pins 1012 support lower brackets 101 and upper brackets 1011 to which a profiled sheet metal apron 1013 is fixed.

The first comb 102, which presents downwardly facing equidistant teeth, is fixed to the outside of the apron 1013.

That end of the rocker arms 11 distant from the power take-off of the power cultivator comprises a bush 1110 which by means of the pins 1112 supports a lower profile bar 111 to which the second comb 112, having downwardly facing equidistant teeth, is fixed.

That end of the rocker arms 11 close to the power take-off of the power cultivator comprises a bush 1210 which by means of the pins 1212 supports a lower profile bar 121 to which the third comb 122, having downwardly facing equidistant teeth, is fixed.

Rubber elements acting as silencing blocks are provided in the interior of he bushes 1010, 1110 and 1210.

The second comb 112 and third comb 122 are constrained to move in phase opposition.

At that end distant from the power take-off the transmission shaft 5 carries a gooseneck 51 provided with two crankpins 511 and 512 in phase opposition.

The crankpin 511 carries a rod 5111 which is secured to the centre by a bearing, and to the ends of which there are fixed, by known means, two ties 5112, such as two cables, which at that end distant from the rod are fixed to two parallelepiped elements 5113 associated with the front apron 1013.

The connection to the apron is made by a guide 5114 of square cross-section welded to the apron and in which the element 5113, rigidly connected to the guide by an end nut via an interposed damper spring 5115, is slidable.

In this manner by means of the springs 5115 and the end nuts (not shown), the two ties 5112 form a single assembly with the apron 1013 and the comb 102, and transmit the reciprocating movement to them.

The crankpin 512 carries a rod 5121 which is secured to the centre by a bearing, and to the ends of which there are fixed, by known means, two ties 5122, such as two cables, which at that end distant from the rod are fixed to two parallelepiped elements 5123 associated with a profile bar 5124 rigid with the upper ends of the pins 1112.

The connection to the profile bar is made by a guide 5125 of square cross-section welded to the profile bar and in which the element 5123, rigidly connected to the guide by an end nut via an interposed damper spring 5126, is slidable.

In this manner by means of the springs 5126 and the end nuts (not shown), the two ties 5122 form a single assembly with the profile bar 111 and the comb 122, and transmit the reciprocating movement to them.

By virtue of the invention, perfect levelling and finishing is achieved in a single forward passage, so attaining all the objects of the invention.

## Claims

1. A levelling machine with oscillating combs supported by a frame fixed to a power cultivator, the rear power take-off of which drives the combs, **characterised by** comprising a series of connecting rods (10) and rocker arms (11) supported by the frame in such a manner as to oscillate in the horizontal plane, three parallel combs or rakes (102, 112, 122), of which one (102) is supported at the end of the connecting rods and two (112, 122) are supported at the opposite ends of the rocker arms, and means for oscillating said connecting rods and said rocker arms, the movement being transmitted to each of the two combs (102, 122) oscillating in phase by a crank mechanism (51) of the connecting rod-crank type, the two cranks (511, 512) being connected in phase opposition to the same shaft (5).

2. A machine as claimed in claim 1, **characterised in that** the frame is connected to the power cultivator by a tube (3) containing the shaft (5) connected to the power take-off (4), the vertical inclination of the tube being adjustable relative to the frame (1) by virtue of a hinge pin (61) and a pair of slots (6).

3. A machine as claimed in claim 1, **characterised in that** the combs are supported by the connecting rods and, respectively, by the rocker arms by means of pins inserted into bushes provided with anti-vibration means.

4. A machine as claimed in claim 1, **characterised in that** each comb is connected to a profile bar or apron (1013, 5124, 121) by pins (1012, 1112, 1212) which pass through the end bushes of the connecting rods and rocker arms.

5. A machine as claimed in claim 1, **characterised in that** each crank (511, 512) of the crank mechanism is connected to the opposite end of the profile bar or apron of the respective comb by two ties fixed by way of an interposed damper spring.
